# EUROPEAN PATENT SPECIFICATION

(11) **EP 4 263 087 B1**
(45) Date of publication and mention of the grant of the patent: **19.11.2025**
(21) Application number: 21836201.0
(22) Date of filing: 17.12.2021
(51) Int. Cl.: B22D 1/00, C21C 1/02, C21C 7/00, C21C 7/064, C21C 7/072, C21C 7/076, C21C 5/46

(54) **PROCESS FOR TREATING MOLTEN IRON**
VERFAHREN ZUR BEHANDLUNG VON EISENSCHMELZE
PROCÉDÉ DE TRAITEMENT DE FER FONDU

(30) Priority: 17.12.2020 EP 20215161
(43) Date of publication of application: 25.10.2023
(73) Proprietor: FOSECO INTERNATIONAL LIMITED, London EC4A 2AE (GB)
(72) Inventor: HRABINA, David, 75002 Prerov (CZ); POWELL, Colin, Barlborough Links Derbyshire S43 4XA (GB)
(74) Representative: Marks & Clerk LLP
(86) International application number: PCT/EP2021/086652
(87) International publication number: WO 2022/129612

(56) References cited:
- EP-A1- 0 396 267
- EP-A1- 0 691 410
- CN-A- 106 435 216
- CN-A- 111 004 965
- CN-U- 210 560 654
- EA-B1- 016 954
- JP-A- 2007 031 810
- JP-A- 2014 237 862
- JP-A- S6 245 464
- RU-C2- 2 247 289
- US-A- 4 496 393
- US-A1- 2009 057 964
- US-A1- 2015 267 272

## Description

### Technical field

The present invention relates to methods for treating molten metal. In particular, the present invention relates to the treatment of molten iron, and more particularly to the treatment of molten iron to thereby produce ductile iron (also known as spheroidal graphite iron or SGI) or compacted graphite iron (CGI) from the molten iron. The invention further relates to systems, devices, and methods for incorporating metal treatment agents into the molten metal. Spheroidal graphite iron or SGI) or compacted graphite iron (CGI) is respectively used to make parts such as automotive components, components for construction equipment or agricultural machinery, ductile iron pipes and general engineering components.

### Background

Metal treatment agents are used to modify the composition, morphology and/or distribution of inclusions found in molten iron. Metal treatment agents applied to molten iron can include nodularising agents and inoculants that may be used to alter the morphology of iron structure, and thereby produce ductile iron as well as CGI.

Accordingly, the production of ductile Iron and CGI from molten iron typically involves addition of a nodularising agent such as magnesium to convert the carbon and graphite present in the molten iron to spheroidal form, wherein the magnesium acts as a nodularising agent. The production of ductile Iron from molten iron can involve the addition of an inoculant (e.g., zirconium, magnesium, etc.) to further drive nucleation of carbon and graphite. Often, the nodularising agents and inoculants are usually based on 90% ferrosilicon wherein ferrosilicon acts as a soluble carrier; in other words, the "active" component of such a ferrosilicon based nodularising agent or inoculant may represent only 10% of the total weight or volume of the nodularising agent or inoculant.

Introducing elemental magnesium into molten iron can be difficult and dangerous since the boiling point of magnesium is below the melting point of iron. Elemental magnesium therefore can vaporise explosively upon contact with the molten iron, if too much is added at once; alternately or in addition, elemental magnesium can oxidise quickly, if too much is added at once. Consequently, a magnesium-based metal treatment agent is usually added in a stabilised form such as ferrosilicon magnesium rather than in elemental form magnesium.

Further, the process of treating molten iron typically involves placing a ferrosilicon-based nodularising agent within a container such as a treatment ladle followed by pouring of the molten iron into the treatment ladle so that the ferrosilicon-based nodulariser or nodularising agent can react with the molten iron. As a subsequent step, a ferrosilicon-based inoculant may be placed within a container such as a pouring ladle followed by transferring of the contents within the treatment ladle into the pouring ladle so that the ferrosilicon-based inoculant can react with the contents received into the pouring ladle to thereby form ductile iron, for example. The nodularising agent causes the carbon to precipitate as graphite spheres rather than graphite flakes, and the inoculant act as the nuclei to increase the number of graphite nodules in the ductile iron.

CN106435216, CN210560654, and EA016954 disclose rotary devices for use in aluminium treatment. JPS6245464 and RU2247289 disclose rotary devices having protective outer surfaces. EP0691410, CN111004965 and US2015/267272 disclose treatment agents for treating iron and steel. US4496393 discloses a plunging capsule for supplying magnesium to molten iron. JP2007031810 discloses a desulphurisation system and process. EP0396267 discloses a system for applying a particulate metal treatment through a rotor. The present invention is aimed at providing an improved method for treating molten metal such as molten iron that overcomes some of the limitations of the art, or at least to provide useful alternatives.

### Summary of the invention

A method for treating molten iron is provided according to claim 1.

The metal treatment agent is applied during the stirring of the molten iron. The application during the stirring may thereby cause the metal treatment agent to bubble through the molten iron e.g. to subsequently form ductile iron or compacted graphite iron (CGI) from the molten iron.

The metal treatment agent comprises a nodularising agent. In one embodiment, the nodularising agent can be one or more of: magnesium, calcium, and calcium carbide. In one embodiment, the nodularising agent is magnesium. According to at least one embodiment, the metal treatment agent comprises at least 50% magnesium. In some embodiments, the metal treatment agent comprises at least 90%, or at least 95% magnesium.

### AMENDED SHEET

According to at least one embodiment, the molten iron may be received from a cupola furnace. Desulphurisation of the molten iron received from the cupola furnace may be accomplished by bubbling at least one of magnesium, calcium, and calcium carbide through the molten iron. The desulphurisation may be followed by testing a level of sulphur in the molten iron. The desulphurisiation and/or testing may be followed by bubbling of magnesium through the molten iron e.g. for the magnesium to operate as a nodularising agent.

According to at least one embodiment, the method further comprises discharging a gas into the molten iron through the rotor head.

The metal treatment agent comprises a wire or a cored wire. According to at least one embodiment, the method can further comprise feeding a cored wire comprising a metal treatment agent into the molten iron. In some embodiments, the cored wire comprises an outer sheath comprising a high melting point metal. The wire may comprise an inner core comprising the metal treatment agent.

In one embodiment, the metal treatment agent comprises magnesium, calcium, calcium carbide, cerium, ferrosilicon magnesium, or combinations thereof.

According to at least one embodiment, applying a metal treatment agent to the molten iron comprises adding a first metal treatment agent and at least a second metal treatment agent. According to at least one embodiment, the second metal treatment agent comprises at least 30% zirconium. In some embodiments, the second metal treatment comprises at least 50% zirconium. According to at least one embodiment, the second metal treatment agent comprises at least 30% barium, or at least 50% barium.

According to at least one embodiment, the second metal treatment agent may comprise an inoculant. The inoculant may be zirconium, manganese, barium, calcium, ferrosilicon, or combinations thereof. Preferably the inoculant is zirconium.

According to at least one embodiment, the first metal treatment agent comprises magnesium. The second metal treatment agent may comprise barium. The method may further comprise applying the second treatment agent followed by applying the first metal treatment agent.

According to at least one embodiment, the method further comprises dispersing argon gas into the molten iron. The argon may be dispersed prior to applying the second treatment agent.

According to at least one embodiment, the rotary device comprises a tubular sleeve comprising a rotor head at one end. The rotary device may comprise a shaft extending inside the tubular sleeve e.g. such that at least a portion of the shaft is enclosed by the tubular sleeve. The tubular sleeve can be formed from a refractory material that is resistant to corrosion and thermal shock. The shaft can be formed from a material comprising graphite. According to at least one embodiment, the shaft can be a hollow shaft. According to at least one embodiment, the metal treatment agent is applied to the molten iron through the rotor head. According to at least one embodiment, the metal treatment agent is applied to the molten iron adjacent to the rotary device. According to at least one embodiment, a first metal treatment agent is applied to the molten iron through the rotor head and a second metal treatment agent is applied to the molten iron adjacent to the rotary device.

According to at least one embodiment, the rotor head is integrally formed with the tubular sleeve. Alternatively, the rotor head may be coupled to the end of the tubular sleeve.

According to at least one embodiment, the hollow shaft has a first end and a second end. The first end may be enclosed by the tubular sleeve. Optionally, the second end of the hollow shaft is configured to be coupled to an apparatus for rotating the rotary device.

According to at least one embodiment, the rotor head includes an outlet for applying the metal treatment agent into molten iron.

According to at least one embodiment, the shaft is a hollow shaft.The hollow shaft may be in communication with the outlet through which the metal treatment agent enters the molten iron.

According to at least one embodiment, there is provided a rotary device (also referred to herein as a "rotor") for stirring a molten metal (e.g., molten iron).

The rotary device may comprise a tubular sleeve comprising a rotor head at one end, and a shaft extending inside the tubular sleeve such that at least a portion of the shaft is enclosed by the tubular sleeve. The tubular sleeve and rotor head may be formed from a refractory material that is resistant to corrosion and thermal shock. The shaft may be formed from a refractory material comprising graphite.

In accordance with a first aspect of the invention, there is provided a method for treating molten metal. The method may comprise applying a metal treatment agent to molten metal. The method may comprise stirring the molten metal using a rotary device comprising a rotor head. In some embodiments, the molten metal is a ferrous metal. In embodiments, the molten metal is iron.

In some embodiments, the molten met iron have a temperature in the range of 1375 to 1550°C. Optionally, the temperature of the molten metal may be at least 1400, at least 1410, at least 1420, at least 1430, at least 1440, at least 1450, at least 1460, or at least 1470°C. Optionally, the temperature may be less than 1540, less than 1530, less than 1520, less than 1510, less than 1500, less than 1490, or less than 1480°C. In some embodiments, the molten metal is from 1450 to 1500°C.

In some embodiments, the molten iron may have a carbon equivalent content of from 3 to 5 wt%. Optionally, the carbon equivalent content may be greater than 3.1, 3.2, 3.3, 3.4, 3.5, 3.6, 3.7, 3.8, 3.9, 4, 4.1, 4.2, 4.3, 4.4, or 4.5 wt%. Optionally, the carbon equivalent content may be less than 4.9, 4.8, 4.7, 4.6, 4.5, 4.4, 4.3, 4.2, 4.1, 4, 3.9, 3.8, 3.7, 3.6, or 3.5%. Any of the lower ranges above may be combined with any of the upper ranges above. The carbon equivalent content is the total content of carbon and any additional materials which have a similar effect to carbon (such as allowing elements) within the molten iron.

It will be understood that any of the optional features and embodiments described in relation to one method may apply equally to any other method described herein.

### Brief description of the drawings

Embodiments of the invention will now be described, by way of example only, with reference to the accompanying schematic drawings in which corresponding reference symbols indicate corresponding parts.
Fig. 1 shows a rotary device according to an embodiment of the present invention, according to various embodiments of the presently disclosed subject matter.
Fig. 2 is a cross-sectional view of the rotary device shown in Fig. 1, according to various embodiments of the presently disclosed subject matter.
Fig. 3 shows a hollow shaft for use with a rotary device according to an embodiment of the present invention, according to various embodiments of the presently disclosed subject matter.
Fig. 4 is a cross-sectional view of a hollow shaft shown in Fig. 3.
Fig. 5 shows a rotary device according to an embodiment of the present invention, according to various embodiments of the presently disclosed subject matter.
Fig. 6 is a cross-sectional view of the rotary device shown in Fig. 5, according to various embodiments of the presently disclosed subject matter.
Fig. 7 is a schematic view of a rotary device according to an embodiment of the present invention, assembled with a stirring apparatus for use in stirring and treating molten metal, according to various embodiments of the presently disclosed subject matter.
Fig. 8 shows velocity field simulation data for (a) a dual-plate rotor head design, and (b) a single-plate rotor head design rotating at 600 rpm, according to various embodiments of the presently disclosed subject matter.
Fig. 9 shows scaled flow pattern simulation data corresponding to the velocity field simulation data shown in Fig. 10.
Fig. 10 shows velocity field and scaled flow pattern simulation data for a single-plate rotor head design rotating at (a) 100 rpm, (b) 200 rpm, and (c) 300 rpm, according to various embodiments of the presently disclosed subject matter.
Fig. 11 is a high-resolution microscopic view of the structure of (a) grey iron, (b) compacted graphite iron (CGI), and (c) ductile iron castings, according to various embodiments of the presently disclosed subject matter.
Fig. 12 is a schematic view of an existing procedure for applying a metal treatment agent into molten iron, according to various embodiments of the presently disclosed subject matter.
Fig. 13 is a schematic view of a procedure for applying a metal treatment agent into molten iron, according to various embodiments of the presently disclosed subject matter.
Fig. 14 shows high resolution microscopic structure of a compacted graphite iron (CGI).
Fig. 15 shows high resolution microscopic structure of a ductile iron with graphite spheroids formed therein around each nucleus.

### Detailed description

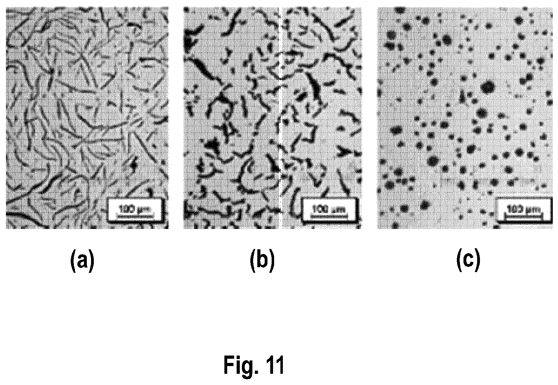

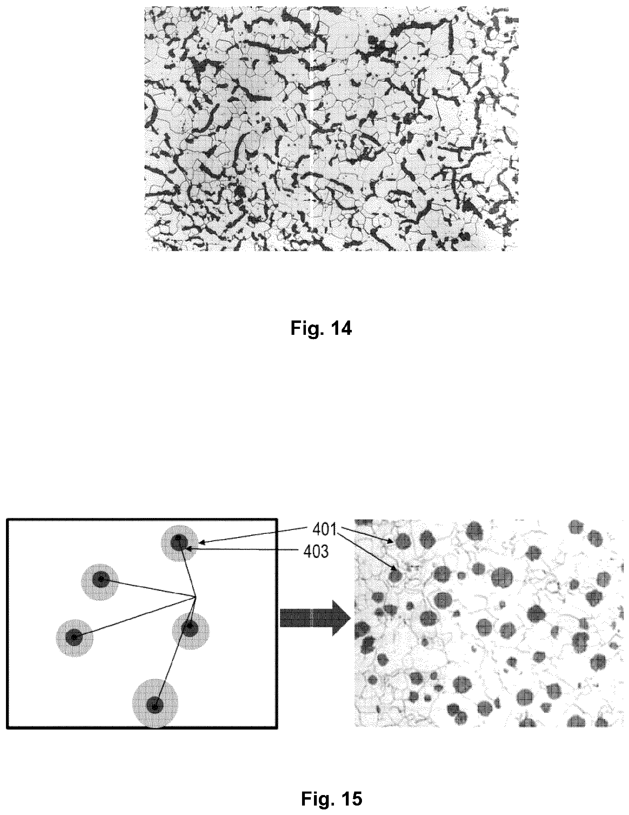

Various embodiments of the presently disclosed subject matter are directed to improved systems, methods, and devices for treating a molten metal such as molten iron to convert the molten iron to improved forms of iron suitable for casting applications - e.g., compacted graphite iron (CGI) and ductile iron castings. Fig. 11 illustrates a high-resolution microscopic structure of the following three major types of castable iron products produced from molten iron: (a) grey iron, (b) compacted graphite iron (CGI), and (c) ductile iron castings, according to various embodiments of the presently disclosed subject matter. Fig. 14 shows high resolution microscopic structure of a compacted graphite iron (CGI). Fig. 15 shows high resolution microscopic structure of a ductile iron. Fig. 15 a further illustrates graphite spheroids 401 formed around nuclei 403. In one embodiment, the nuclei can be supplied by an inoculant additive that is added to the molten iron, whereby the graphite present in the molten iron forms graphite spheroids 401 around the nuclei 403 supplied by the inoculant to thereby result in the formation of a more ductile (and less brittle) form of iron such as, for example, ductile iron and compacted graphite iron (CGI).

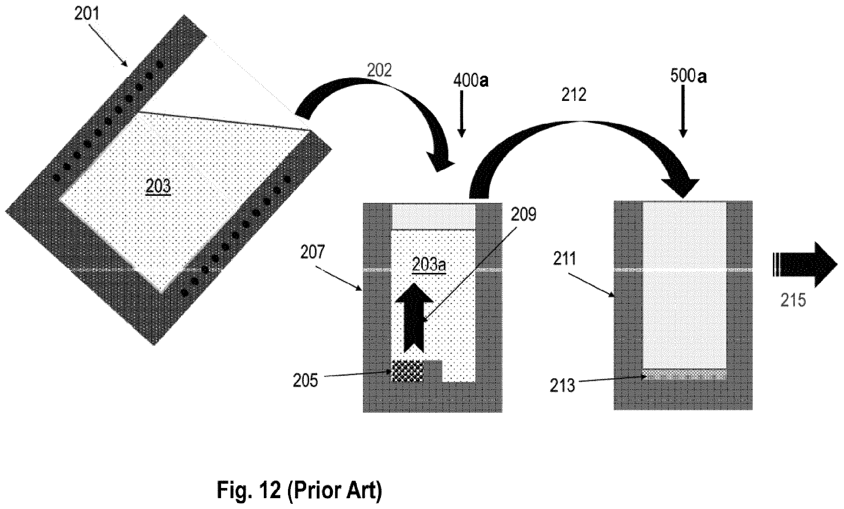

Fig. 12 is illustrated an existing method of treating molten iron. According to an existing method shown in Fig. 12, a metal treatment agent 205 (e.g., a nodularising agent) such, as for example, a ferrosilicon based nodularising agent (e.g., FeSiMg) is placed in (or preloaded into) a treatment ladle 207 after which molten iron 203 present in a furnace 201 is transfered into the treatment ladle 207 carrying the metal treatment agent 205. Arrow 202 indicates the transfer of molten iron 203 into treatment ladle 207.

After the transfer of molten iron 203 present in a furnace 201 into the treatment ladle 207 containing the metal treatment agent 205, first stage 400a commences wherein the metal treatment agent 205 reacts with molten iron 203 to form nodularised molten iron 203a. reaction 209 is shown as an arrow representing the reaction of metal treatment agent 205 with molten iron 203 to thereby form nodularised molten iron 203a. Nodularised molten iron 203a present in treatment ladle 207 is then transferred to a pouring ladle 211 which is preloaded with an inoculant 213, such as, for example, a ferrosilicon-based inoculant. Arrow 212 indicates the transfer of nodularised molten iron 203a into pouring ladle 211. Second stage 500a then commences wherein the inoculant 213 reacts with nodularised molten iron 203a to form one or more of ductile iron and/or compacted graphite iron (CGI) from the nodularised molten iron 203a. Arrow 215 represents the next step of casting.

Accordingly, as illustrated in Fig., 12, various existing methods involve placing a metal treatment agent (such as a ferrosilicon-based nodularising agent) within a first container such as a treatment ladle to initiate a reaction to thereby form nodularised molten iron. The existing methods optionally further involve an inoculant such as a ferrosilicon-based inoculant being placed within a second container such as pouring ladle followed by transferring of contents within the treatment ladle (i.e., nodularised molten iron) into pouring ladle so that the ferrosilicon-based inoculant can react with nodularised molten iron contained in pouring ladle to thereby form ductile iron, for example, that can then be used for casting iron products.

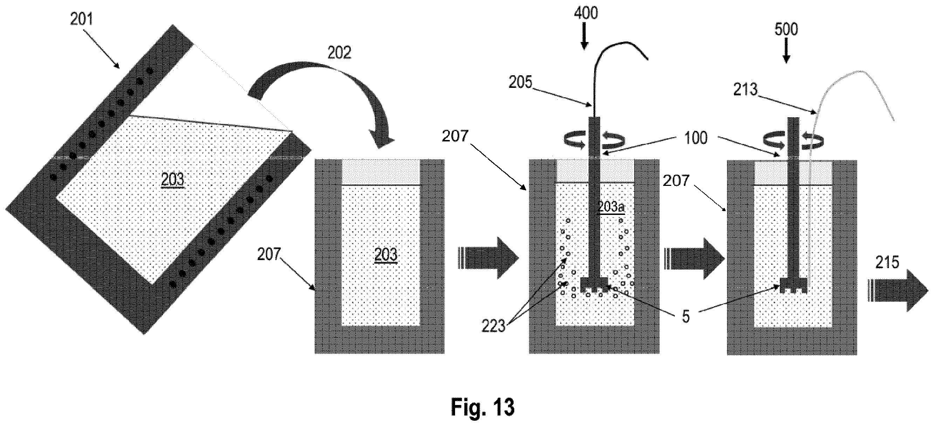

Embodiments of the presently disclosed subject matter as illustrated, for e.g., in Fig. 13, include various improvements over the method described with reference to Fig. 12.

One embodiment of an improved method and system for treating molten metals such as molten iron is illustrated in Fig. 13. Fig. 13 thus shows a method of treating molten iron according to at least one embodiment of the presently disclosed subject matter. According to the method shown in Fig. 13, molten iron 203 present in furnace 201 is transferred into a treatment ladle 207. Arrow 202 indicates the transfer of molten iron 203 into treatment ladle 207. Subsequently, a rotary device 100 comprising a rotor head 5 is introduced into molten iron 203 contained in treatment ladle 207. During operations, rotor head 5 of rotary device 100 rotates thereby operating to stir, churn and/or agitate molten iron 203. A metal treatment agent 205 (shown, for e.g., in Fig. 13 in the form of a wire) is applied during the stirring of molten iron 203 by rotor head 5 to thereby cause the metal treatment agent 205 to vaporize and bubble through the molten iron in the form of small bubbles 223.

In one embodiment, the metal treatment agent 205 primarily comprises of magnesium. In one embodiment, the metal treatment agent comprises at least 20% magnesium. In various embodiments, metal treatment agent 205 can include at least 25%, 30%, 35%, 40%, 45%, 50%, 55%, 60%, 65% 70%, 75%, 80%, 85%, or 90% magnesium. In one embodiment, the metal treatment agent comprises at least 90% magnesium. In one embodiment, the metal treatment agent comprises at least 95% magnesium. In one embodiment, the metal treatment agent comprises at least 98% magnesium.

For sake of ease of explanation, metal treatment agent 205 will henceforth often be described with reference to magnesium. The boiling point of magnesium is about 1,996 °F (1,091 °C) whereas the melting point of iron is about 2,120°F (1,160 °C). Thus, vaporization of magnesium occurs as soon as magnesium contacts the molten iron due to the high temperature of the molten iron relative to the boiling point of magnesium. Accordingly, magnesium vaporizes on interaction with the high temperatures associated with molten iron 203. The magnesium that vaporizes is converted into small bubbles 223 due to the stirring or churning of the molten iron by the rotations of the rotating rotor head 5. The first stage 400 of the improved method and system accordingly constitutes the metal treatment agent 205 (e.g., in the form of a nodularising agent such as magnesium) reacting with molten iron 203 to form nodularised molten iron 203a.

The metal treatment agent comprises a wire, or a cored wire. In at least one embodiment, the method comprises feeding a cored wire comprising a metal treatment agent into the molten iron. In one embodiment, the cored wire comprises an outer sheath comprising a high melting point metal. The cored wire may comprise an inner core comprising the metal treatment agent. In one embodiment, the metal treatment agent comprises magnesium, calcium, calcium carbide, cerium, ferrosilicon magnesium, or combinations thereof. In one advantageous embodiment, metal treatment agent 205 is in the form of magnesium.

In one embodiment, a gas (e.g., argon gas) is applied into the molten iron at the same time as magnesium, especially when magnesium is in the form of powder. The gas may, for e.g., push magnesium down and out of the hollow shaft forming part of the rotary device 100 and prevent it becoming blocked.

Under existing methods as shown in Fig. 12, inclusion of magnesium at concentrations above 10% would cause the magnesium to react too violently with molten iron 203. By contrast, with the improved methods disclosed, for e.g., in Fig. 13, the spinning of rotor head 5 operates to advantageously create very fine bubbles of magnesium vapour such as small bubbles 223 that are more easily absorbed by the molten iron. The stirring and churning action caused by the rotor head 5 further aids in a lot less violent but nonetheless highly effective reaction of magnesium with molten iron 203. In various embodiments, the speed of rotation of rotor head 5 is optimized to minimize the size of the magnesium (or any other suitable metal treatment agent) vapor bubbles while simultaneously increasing the efficacy of the reaction with molten iron by maximizing the surface area of magnesium that comes in contact with the molten iron, and further continually causing different portions of the molten iron to come in contact with the magnesium. The churning and stirring action caused by the rotor head 5 is accordingly advantageous. Thus, the improved methods operate to not only cause an optimal reaction to occur but also to reduce the time needed for the optimal reaction to take place. The churning and stirring action of the rotor further aids this. Finer bubbles of magnesium provide for the magnesium to get absorbed quicker into the iron, resulting in higher yield and in lowering any (undesirable) oxidation. In various embodiments, the speed of rotation of rotor head 5 can be adjusted to optimize the reaction occurring in first stage 400 (as well as the second stage 500) illustrated in Fig. 13.

The method illustrated in Fig. 13 can advantageously provide for using a higher concentration of magnesium as compared to existing methods. The use of a higher concentration of magnesium provides significant cost benefits over existing methods as illustrated, for example, in Fig. 12. For example, in existing methods of ladle treatment known as the 'sandwich process', metal treatment agent in the form of FeSiMg may typically include only about 10% of magnesium content, since any higher concentration of magnesium will result in an excessively violent reaction. By contrast, the improved methods disclosed herein can handle higher concentrations of magnesium, for e.g., up to 98% purity or higher depending on the application at hand.

The reaction/treatment that occurs at first stage 400 results in the formation of nodularised molten iron 203a. In at least one embodiment, nodularised molten iron 203a itself may be used for casting; in other words, nodularised molten iron 203a is in the form of ductile iron or compacted graphite iron (CGI) that is suitable for casting iron products. Arrow 215 represents the next step of casting.

In some embodiments according the improved methods disclosed herein, nodularised molten iron 203a is further subject to a second stage 500. In second stage 500, an inoculant 213 (shown in Fig. 13 to be in the form of a wire) is applied to the nodularised molten iron 203a present in treatment ladle 207. According to at least one embodiment, inoculant 213 reacts with nodularised molten iron 203a to modify the structure of nodularised molten iron 203a to give higher nodule counts, smaller and more regular nodule sizes

The method illustrated in Fig. 13 can advantageously provide for a far more effective reaction between the nodularising agent and molten iron and between the inoculant and molten iron as compared over existing methods, as illustrated, for example, in Fig. 12. For example, in existing methods, the nodularising agent as well as the inoculant is usually based on 90% ferrosilicon (ferrosilicon acting as a soluble carrier). In existing methods, metal treatment agent in the form of FeSiMg (containing a lower concentration of magnesium) is placed at the bottom of the ladle floor, which leads to inconsistent interaction between the molten iron and magnesium vapours due to the lack of churning or stirring action; it also results in large bubbles of magnesium vapours interacting with a stationary (i.e., motionless) volume of molten iron. This can result in a high proportion of magnesium vapours reaching the upper surface of the molten iron without ever reacting with molten iron thereby leading to waste. It can also result in the contents of the molten iron being transferred onto the next stage (i.e., the second stage 500a) prematurely without the lower portion of magnesium positioned closer to the ladle floor ever getting a chance to react with molten iron - further affecting the quality of the reaction while simultaneously resulting in wastage of FeSiMg.

By contrast, the improved methods and systems disclosed herein can provide for pure (100%) magnesium or a high concentration (e.g., above 40%, above 50%, above 60%, above 70%, above 80%, above 90%, above 95%, above 98%, etc., and other percentages therebetween) of magnesium being used for the nodularising reaction; this reduces the cost and volume of raw materials needed for the nodularising reaction. Further, since the magnesium is introduced from the top, the improved methods and systems disclosed herein eliminate unintended wastage of magnesium resulting from unreacted magnesium as is the case with existing methods. The improved methods and systems disclosed herein further lead to a consistent reaction due to the following factors: (1) churning action of the rotor head 5 actively moving molten iron through and between the magnesium vapour bubbles, (2) smaller bubbles of magnesium generated by the churning action of the rotor head 5 resulting in more surface area of magnesium contacting molten iron, and (3) the ability to automatically control the feeding speed/volume of magnesium (since the magnesium is being introduced from the top into molten iron already present in the ladle). The improved methods and systems disclosed herein further prevent the need for the contents of a first ladle (the treatment ladle) to be transferred onto a second ladle (the pouring ladle) before the next stage (i.e., the second stage 500) can take place; this is because magnesium and the inoculant can be added to the molten iron in the same first ladle (the treatment ladle), as illustrated, for example, in Fig. 13. The improved methods and systems disclosed herein can further provide for controlled addition of magnesium during the first stage 400 reaction as the reaction can be better monitored and controlled for quality due to magnesium, for e.g., in the form of a wire, being added into molten iron from the top. By contrast, according to existing methods, molten iron is poured onto FeSiMg that is already preloaded into the ladle.

According to the improved methods and systems disclosed herein, a method for treating molten iron comprises applying a metal treatment agent into molten iron; and stirring the molten iron using a rotary device comprising a rotor head 5. In some embodiments, the metal treatment agent (e.g., a nodularising agent in the form of magnesium) is applied during the stirring to thereby cause the metal treatment agent to bubble through the molten iron; and thereby make ductile iron or compacted graphite iron (CGI) from the molten iron.

The inventors have found that applying a metal treatment agent to the molten iron, combined with stirring the molten iron can lead to a reduction in the amount of metal treatment agent required. Nodularising agent, such as magnesium, rapidly vaporise in molten iron. Thus, by stirring the molten iron, the inventors have found that the bubbles of magnesium gas can be better dispersed through the iron and the size of the bubbles can be reduced in size, thus increasing the surface area to volume ratio, leading to increased residence time and improved absorption into the iron. For magnesium, should the bubble of gas reach the upper surface of the molten iron, it will rapidly oxide to form MgO slag layer and no longer be active as a nodulant. The improved methods disclosed herein can advantageously minimize the amount of magnesium that reaches the upper surface of the molten iron. This slag, if allowed to enter the mould can block filters and cause casting defects such as slag inclusions.

In embodiments, the metal treatment agent may be applied to the molten iron adjacent to the rotary device. Additionally, or alternatively, the metal treatment agent may be applied to the molten iron through the hollow shaft, and optionally, through the rotor head.

In various embodiments, the method may comprise feeding a cored wire comprising a metal treatment agent into the molten metal. In embodiments, the cored wire comprises an outer sheath comprising a high melting point metal, such as iron or steel, and an inner core comprising the metal treatment agent. In embodiments, the metal agent comprises a desulphurising agent, a nodularising agent, an inoculating agent, or mixtures thereof. In embodiments, the metal treatment agent comprises magnesium, ferrosilicon magnesium, calcium, calcium oxide, calcium carbide, barium, strontium, or combinations thereof, in elemental or compound form.

In an advantageous embodiment, the cored wire comprises a magnesium core and an iron or steel sheath. In use, the outer sheath can protect the core agent from immediate reaction or oxidation and gradually melts or dissolves to release the agent at a predetermined depth under the surface of the molten metal. The combination of treatment with a cored wire can further improve desulphurisation and/or treatment and modification of the structure of the molten iron.

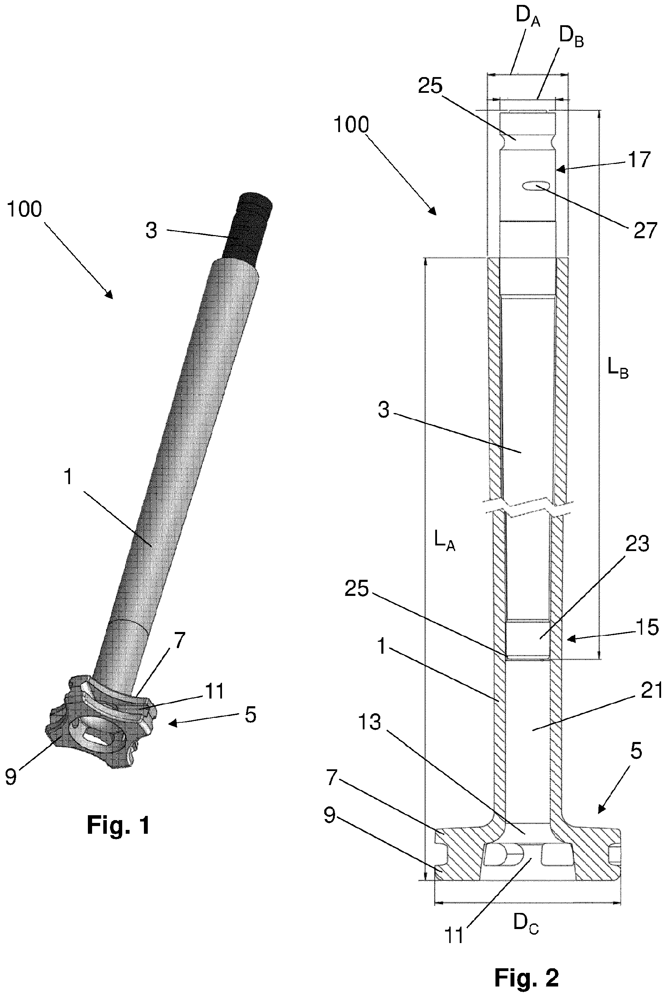

In various embodiments, the rotary device 100 comprises a tubular sleeve 1 comprising a rotor head 5 at one end, and a shaft extending inside the tubular sleeve 1 such that at least a portion of the shaft is enclosed by the tubular sleeve, wherein the tubular sleeve 1 is formed from a refractory material that is resistant to corrosion and thermal shock, and wherein the shaft is formed from a material comprising graphite. In one embodiment the shaft is a hollow shaft such as hollow shaft 3 shown in Fig. 1.

According to one embodiment, the hollow shaft has a first end and a second end, and wherein the first end is enclosed by the tubular sleeve, optionally wherein the second end of the hollow shaft is configured to be coupled to an apparatus for rotating the rotary device. According to one embodiment, the rotor head 5 includes an outlet for applying the metal treatment agent into molten iron. According to one embodiment, the shaft is a hollow shaft, wherein the hollow shaft can be in communication with the outlet. In one embodiment, the rotor head 5 is integrally formed with the tubular sleeve 1. In one embodiment, the rotor head 5 is coupled to the end of the tubular sleeve.

According to one embodiment, the metal treatment agent is applied to the molten iron through the shaft that is hollow. According to one embodiment, the metal treatment agent is applied to the molten iron through the rotor head 5. According to one embodiment, the metal treatment agent is applied to the molten iron adjacent to the rotary device. According to one embodiment, a gas is discharged into the molten iron through the rotor head 5.

For the sake of comparison, the mechanical properties of different forms of iron are as follows: (1) grey iron 150 - 350 Mpa (megaPascals) UTS (ultimate tensile strength); ductile iron 350 - 800 MPa UTS. The improved methods disclosed herein provide for efficient production of iron that is more ductile. The graphite present in molten iron in flake form often acts as a crack initiator. Transforming the shape of graphite into spheroids produces iron that is more ductile; this in turn can allow for the strength of the iron to be increased without the iron becoming too brittle. The nodularisation process includes the treatment of molten iron with a nodularising agent such as magnesium that results in graphite being converted to spheroids form instead of flakes. Graphite in flake form causes iron to be more brittle and less ductile, whereas graphite in spheroid form causes iron to be more ductile and less brittle. Graphite in spheroid form thus increases the ductility of the iron and further allows steel strength to be obtained without the iron being too brittle to use. Use of a rotor head to churn the molten iron breaks up injected bubbles of magnesium and simultaneously stirs the molten iron for improved absorption efficiency. The improved process allows for the feeding of magnesium cored wire to initiate spheroidization of graphite. Accordingly, in at least one embodiment, the metal treatment agent comprises a nodularising agent, preferably magnesium. In some embodiments, cerium is used as a nodularising agent. Magnesium is advantageous since it is more cost efficient.

The method comprises discharging a solid metal treatment agent through the rotor head. The metal treatment agent is in the form of a wire. In some embodiments, the metal treatment agent is comprised in a cored wire. Discharging an agent through the rotor head or adjacent to it allows the metal treatment agent to be quickly and efficiently dispersed throughout the molten metal.

The inventors of the present invention have found that this rapid dispersion allows elemental Mg or Ca to be used as the agent with a significant reduction of the hazards usually associated with using elemental Mg/Ca in molten metals, since the Mg/Ca is quickly dispersed throughout the metal before it vaporises or oxidises. This in turn also decreases the amount of agent required to effectively treat the molten metal, reducing build-up of excess agent which can cause brittleness in the finished casting.

Discharging the agent through the rotor head further operates to shield the metal treatment agent from exposure to the molten metal while it is contained within the rotary device and allows it to be released into the molten metal at a depth corresponding to the depth of the rotor head, so a protective coating is not necessarily required. However, a cored wire comprising a protective coating may be used for convenience, where other forms of metal treatment agent are not available, or in cases where it is necessary for the agent to reach a lower depth before release into the molten metal.

A further advantage of applying a treatment agent through the rotor head is that the feed rate of the metal treatment agent is less important. Conventionally, the feed rate of the wire or cored wire is controlled such that the wire melts at the correct depth. Wires fed too slowly melt too high in the molten metal; wires fed to rapidly can contact and damage the lining of the vessel in which the application is taking place (e.g., a ladle or furnace).

In some embodiments, applying a metal treatment agent comprises adding a nodularising agent to the molten iron. The nodularising agent can operate to control the structure of the carbon inclusions within the cast iron. For example, the nodularising agent can comprise magnesium. Application of nodularising agent creates nodular graphite inclusions within the iron and this improves impact and fatigue resistance of the final casting.

According to at least one embodiment, inoculants are applied to molten iron to produce better quality casting iron. An inoculant functions to provide nuclei for the crystallization of iron or carbon. For example, higher inoculation in ductile iron typically means more nuclei leading to higher nodule count, which in turn gives better properties to the resulting iron produced therefrom.

In various embodiments, the inoculants can include or constitute zirconium, manganese, and similar other elements. In some embodiments, the inoculants can include or constitute barium, calcium, and similar other elements. According to at least one embodiment, the improved method includes applying a first metal treatment agent and at least a second treatment agent, wherein the second metal treatment agent comprises an inoculant, preferably zirconium, manganese, barium, calcium, ferrosilicon, or combinations thereof. In one embodiment, the second metal treatment agent comprises at least 30% zirconium, preferably at least 50% zirconium.

Existing methods for ductile cast iron production involve addition of magnesium in the form of FeSiMg to make the graphite spheroidal, and inoculant to drive nucleation. The improved methods as disclosed herein can advantageously provide for the use of concentrated inoculant cored wire that can be introduced into the molten iron while the spinning rotor head is stirring and churning the molten iron. This results in the active ingredients of inoculants to easily disperse and dissolve within the molten iron. Use of rotary device 100 can accordingly advantageously provide for the use of more concentrated inoculant. The methods disclosed herein thereby provide for less volume of nodularising agents and inoculants being needed - the methods disclosed herein accordingly provide for an environmentally friendly solution that requires lower transportation and storage resources.

According to one embodiment, the molten iron is an output of a cupola furnace. As is well understood by a person of skill in the art, a cupola furnace (or just "cupola") is a melting device used in foundries to melt cast iron. According to one embodiment, the molten iron is received from a cupola furnace is desulphurised by bubbling at least one of magnesium, calcium, and calcium carbide through the molten iron, followed by testing a level of sulphur in the molten iron, followed by bubbling of magnesium through the molten iron for the magnesium to operate as a nodularising agent.

According to one embodiment, applying a metal treatment agent to molten iron comprises adding a first metal treatment agent (e.g., a nodularising agent) and at least a second metal treatment agent (e.g., an inoculant). According to one embodiment, the first metal treatment agent is applied to the molten iron through the rotor head 5 and wherein the second metal treatment agent is applied to the molten iron adjacent to the rotary device.

According to one embodiment, applying a metal treatment agent to molten iron comprises adding a first metal treatment agent and a second treatment agent, wherein the first metal treatment agent comprises barium and the second metal treatment agent comprises magnesium, wherein the method further comprises barium followed by applying magnesium. In one embodiment, the first metal treatment agent comprises at least 30% barium. In one embodiment, where barium operates as a deoxidizer (rather than as an inoculant), barium is added at the bottom of the ladle before or by a wire fed next to the rotor. In one embodiment where barium operates as a deoxidizer, the barium may be placed at the bottom of the vessel, molten iron may then be added to the vessel, and the rotary device may then churn the molten iron to enhance the reaction of barium with the molten iron.

In one embodiment, the method further includes dispersing argon gas into the molten iron prior to applying the second treatment agent. The argon gas may operate to transport the first treatment agent within the hollow shaft or within the sleeve. In various embodiments, a gas (e.g., argon gas) may be added along with the magnesium cored wire or with powder form magnesium to retain a positive gas pressure inside the rotor hollow and prevent iron from flowing up into the rotor.

In one embodiment, the sleeve includes carbon. In one embodiment, the sleeve can be made of fused silica. A sleeve made of fused silica may not require preheating prior to introduction of the sleeve into molten iron; however, a sleeve made of fused silica may be used only once, i.e., may not be reusable. In various embodiments, the sleeve can be made of any material that resists reaction with iron and has thermal shock resistance. In some embodiments, the sleeve is preheated (for e.g., using one or more burners) prior to introduction of the sleeve into the molten metal. In one embodiment, the sleeve is heated in the range of about 600-800 degrees C. In some embodiments, the sleeve need not be preheated, i.e., the sleeve is configured for "cold-start". In some embodiments, the sleeve is made of a carbon bonded material, typically isostatically pressed. In some embodiments, the sleeve may be formed of a clay graphite material, or an alumina-based material. In one embodiment, the sleeve may allow for 10, 20 or even up to 50 uses before it needs to be replaced.

The methods disclosed herein can provide for the use of pure form of magnesium that can provide significant cost benefits over the less concentrated form of magnesium (in the form of FeSiMg) used in existing methods. Whereas pure magnesium may otherwise react violently with molten metal, by way of the improved methods disclosed herein, the spinning rotor creates finer bubbles of magnesium vapour that are more easily absorbed, with the stirring action of the rotor further aiding the absorbing of magnesium by the molten iron. Finer bubbles resulting from the methods disclosed herein can result in magnesium being absorbed quicker into the iron, resulting in higher yield and lower oxidation.

The methods disclosed herein can provide for significantly less volume of raw materials being required for the nodularising step. In one embodiment, the methods disclosed herein can provide for 70% reduction in the volume of raw materials used for the nodularising step. The methods disclosed herein can also provide for a more sustainable procedure that results from reduced transport and storage resources. The methods disclosed herein can also provide for automation of the magnesium addition process. The methods disclosed herein can provide for the use of a single ladle (the same treatment ladle can be used for first stage 400 and second stage 500) as compared to existing methods. Existing methods require two ladles (a treatment ladle and a pouring ladle) in addition to requiring an extra step of transferring the contents of the first ladle to the second ladle.

In some embodiments, the metal treatment agent is applied in the form of a powder on the surface of the molten metal. In some such embodiments, the molten metal is stirred with the rotary device such that the powder is entrained in and dispersed throughout the molten metal. In embodiments, the metal treatment agent is applied in the form of a wire which is fed into the molten metal. In embodiments, the wire is a cored wire comprising a protective outer sheath, as described above in relation to the third aspect. In embodiments, the wire is fed into the molten metal in conjunction with the rotary device.

In some embodiments, applying a metal treatment agent to molten iron may comprise adding a first metal treatment agent and at least a second treatment agent. In some embodiments, the first metal treatment agent is applied to the molten iron through the rotor head. The second metal treatment agent may be applied to the molten iron adjacent to the rotary device. The second metal treatment agent may be applied to the molten iron after the first metal treatment agent has been applied.

The second metal treatment agent may comprise any treatment agent discussed herein. In some embodiments, the second metal treatment agent may be an inoculant. The inventors have discovered that stirring the molten iron allows for inoculants to be applied in the form of concentrated cored wires. Accordingly, the inoculants can be applied at a much greater purity - in other words, the amount of "carrier" present within the metal treatment agent relative to active ingredient can be reduced. Inoculants are well known and are often based on barium and zirconium compounds.

In some embodiments, the rotary device is made particularly suitable for stirring higher temperature and higher density molten metals, such as iron.

In some embodiments, the method further comprises discharging gas into the molten metal through the rotor head. In embodiments, the gas comprises one or more gases which are not soluble in the molten metal. In embodiments, the gas comprises argon, nitrogen, carbon monoxide or mixtures thereof.

In some embodiments, the method may further comprise flowing gas through the rotor head immediately prior to removing the rotary device from the molten iron. The inventors have found that this reduces the amount of iron remaining on the rotary device once the process is complete, and thus prolongs the life of the rotary device.

The improved methods disclosed herein may be suitable for use in any ladle or furnace, including a coreless induction furnace (CIF). In embodiments where the method is used in a ladle, the molten metal may be poured into the ladle (tapped) from a CIF or cupola. The improved methods disclosed herein may be particularly suitable for treating molten iron but may also be used to treat other molten metals which require nodularisation, inoculation or desulphurisation.

In some embodiments, the rotary device is rotated at a speed of at least 50, at least 100, at least 200 or at least 300 rpm to stir the molten metal. In some embodiments, the rotary device is rotated at a speed of no more than 800, no more than 600, no more than 500, no more than 400 or no more than 300 rpm to stir the molten metal. In some embodiments, the rotary device is rotated at a speed of from 50 to 600 rpm, from 100 to 400 rpm, or from 200 to 300 rpm, for example 250 rpm. Higher rotation speeds may increase the overall flow velocity and amount of downward flow from the rotor head (i.e., increased bottom stirring), but may also increase air entrainment into the molten metal. Increasing the rotation speed beyond 800 rpm may cause formation of a vortex, which entrains air back into the melt with deleterious effects. In some embodiments, the rotation speed is varied during the method.

The rotary device may be for treating a molten metal with gas. The shaft may be hollow. The rotor head may comprise a gas outlet for discharging gas into the molten metal, and the hollow shaft may be fluidly connected to the gas outlet of the rotor head.

The inventors of the present invention have found that a two-part rotor, comprising an internal shaft made from a material comprising graphite and an outer tubular sleeve and rotor head made from a more resistant refractory material, has excellent durability and longevity in higher temperature molten metals such as iron and steel. Embodiments of the rotary device showed little to no deformation after repeated testing in molten steel, while also achieving good stirring and purging efficiency. A hollow shaft comprising graphite was found to be suitably resistant to the high temperatures of molten steel without melting or shattering, while also having a sufficient degree of plasticity to be mounted on a motor without breaking in use. Without wishing to be bound by theory, it is thought that an inner shaft made from metal would soften too much under the temperatures experienced in molten iron/steel, and an inner shaft made from ceramic materials would be too brittle for mounting on a motor. The inventors have therefore found graphite to be particularly suitable for use in the hollow shaft of the present invention. Although graphite would not normally be considered suitable for use in molten iron, since graphite can dissolve in molten iron, in the present invention the hollow shaft comprising graphite is protected by the outer tubular sleeve.

In embodiments, the tubular sleeve is formed from a refractory material comprising fused silica, silicon carbide, alumina, carbon-bonded alumina, carbon-bonded ceramics, clay graphite, silicon alumina nitride, isostatically pressed (also known as isopressed) refractory mixtures comprising metal oxides, carbides, or nitrides, or refractory substrates coated with alumina and/or magnesium zirconates or metal oxides or a combination thereof. The rotor head may also be formed from a refractory material comprising fused silica, silicon carbide, alumina, carbon-bonded alumina, carbon-bonded ceramics, clay graphite, silicon alumina nitride, isopressed refractory mixtures comprising metal oxides, carbides, or nitrides, or refractory substrates coated with alumina and/or magnesium zirconates or metal oxides or a combination thereof. In some embodiments, the tubular sleeve and the rotor head are both made from the same material. In alternative embodiments, the tubular sleeve and the rotor head are made from different materials.

Highly resistant refractory materials including fused silica, silicon carbide, alumina, carbon-bonded alumina, carbon-bonded ceramics, clay graphite, silicon alumina nitride, isopressed refractory mixtures comprising metal oxides, carbides, or nitrides, or refractory substrates coated with alumina and/or magnesium zirconates or metal oxides or combinations thereof have sufficient resistance to corrosion and thermal shock to be used in molten iron without degradation or the need for priming.

In embodiments, the tubular sleeve and/or rotor head are formed from a refractory material comprising isopressed carbon-bonded alumina, for example the refractory material manufactured by Vesuvius Plc. under the tradename VisoTM. The inventors of the present invention have found that rotors made using isopressed carbon-bonded alumina are particularly durable.

In embodiments, the rotor head is integrally formed with the tubular sleeve. In other embodiments, the rotor head is a separate component that is coupled to the end of the tubular sleeve. In such embodiments, the rotor head may be coupled to the end of the tubular sleeve by any suitable means, e.g., threading, push-fit, etc.

In embodiments, the hollow shaft has a first end and a second end, wherein the first end of the hollow shaft is enclosed by the tubular sleeve. In embodiments, the second end of the hollow shaft is configured to be coupled to an apparatus for rotating the rotary device (e.g., a motor). For example, the second end of the hollow shaft may comprise a pulley configured to be connected to a motor by a V-belt, or the second end of the hollow shaft may be configured to be mounted directly onto a motor shaft. In some embodiments, or the second end of the hollow shaft may be configured to receive a collar which comprises a pulley for a V-belt, or a collar which is configured to be coupled to a motor shaft by other means, e.g., by providing a flange with apertures for bolts.

The hollow shaft may have a length measured between the first and second ends. In embodiments, at least 50%, at least 60%, at least 70%, at least 80% or at least 90% of the length of the hollow shaft is enclosed by the tubular sleeve. In embodiments, the hollow shaft is substantially completely enclosed by the tubular sleeve, although it will be understood that in such embodiments the tubular sleeve is open in the vicinity of the second end of the hollow shaft, such that the second end of the hollow shaft may still be coupled to an apparatus for rotating the rotary device.

In embodiments, the first end of the hollow shaft (which is enclosed by the tubular sleeve) comprises a locking portion configured to engage with a complementary receiving portion inside the tubular sleeve. The locking and receiving portions may not only help to fix the tubular sleeve securely to the hollow shaft, but also lock the hollow shaft and tubular sleeve into mutual rotation, preventing the hollow shaft from spinning independently of the tubular sleeve in use. The complementary receiving portion may be located at the end of the tubular sleeve comprising the rotor head. In use, the tubular sleeve may soften and although supported by the internal graphite hollow shaft, some twisting may occur at the rotor. By providing the receiving portion at the end of the tubular sleeve comprising the rotor head, there is less twisting of the tubular sleeve than would be the case if it were to be driven from the end away from the rotor head. It will be appreciated that the receiving portion does not necessarily have to be at the absolute end of the tubular sleeve and may be positioned spaced away from the absolute end.

In embodiments, the locking portion and the receiving portion have a polygonal cross-section. It will be understood that in such embodiments the locking portion and the receiving portion will have the same polygonal cross-section, with the locking portion being slightly smaller in diameter to fit snugly inside the receiving portion. The edges of the locking portion abut against the edges of the receiving portion, preventing the locking portion from rotating within the receiving portion. In some embodiments, the polygonal cross-section comprises at least 3, 4, 5 or 6 vertices. Preferably, the polygonal cross-section comprises no more than 12, 11 or 10 vertices, to ensure that the angle formed between the edges of the polygon is acute enough to prevent the vertices of the locking portion from being able to slide between adjacent vertices of the receiving portion. In other embodiments, the locking portion and the receiving portion have a cross-section which is circular with chords removed.

The tubular sleeve may have a length measured along its longitudinal axis. In some embodiments, the hollow shaft extends inside the tubular sleeve along at least 30%, at least 40%, at least 50%, at least 60%, at least 70%, at least 80% or at least 90% of the length of the tubular sleeve. As such, the hollow shaft may terminate above the rotor head, as opposed to extending into the rotor head. In embodiments, the hollow shaft extends inside the tubular sleeve along substantially the entire length of the tubular sleeve, such that the first end of the hollow shaft is located directly adjacent to the rotor head. In embodiments where the hollow shaft does not extend inside the tubular sleeve along substantially the entire length of the tubular sleeve, and where the first end of the hollow shaft is not directly adjacent to the rotor head, the tubular sleeve may comprise a conduit or bore which fluidly connects the hollow shaft to the gas outlet of the rotor head.

In some embodiments, the second end of the hollow shaft may be secured to the tubular sleeve by clamping means. The rotor head may be of any suitable shape or configuration for stirring molten metal.

In embodiments, the rotor head comprises a planar surface (or plate) extending in a direction perpendicular to the longitudinal axis of the tubular sleeve, and a plurality of vanes projecting from the planar surface in a direction substantially parallel to the longitudinal axis of the tubular sleeve. In such embodiments, the gas outlet may comprise a bore in the planar surface. In embodiments, the bore is located in the centre of the planar surface. In some embodiments, the rotor head comprises a second planar surface (or plate) oppositely disposed the first planar surface and connected thereto by a plurality of vanes or pillars. Such embodiments may also comprise vanes projecting from the base of the second plate. The plate(s) may be substantially circular or polygonal in shape, e.g., square-shaped. In embodiments, the plate(s) may be approximately square shaped with concave edges and truncated corners.

Single-plate rotor head designs have been found to be easier to manufacture by pressing techniques (for example using materials such as isopressed carbon-bonded alumina) than dual-plate designs. Although dual-plate rotor head designs can be manufactured by pressing techniques, it was found that full densification could not always be achieved across the entire rotor head. Single-plate rotor head designs may increase the amount of downward flow away from the rotor head, whereas dual-plate rotor head designs may increase the amount of lateral flow away from the rotor head.

The hollow shaft and the tubular sleeve may be coupled together via a friction fit. Other coupling means and mechanisms may also be used. In some embodiments, there is provided a tubular sleeve for use with the rotary device described herein.

The tubular sleeve may be formed from a refractory material which is not soluble in iron. The tubular sleeve may be formed from a refractory material which does not comprise graphite such as fused silica. For example, the tubular sleeve may be formed from a refractory material comprising silicon carbide, alumina, carbon-bonded alumina, carbon-bonded ceramics, clay graphite, silicon alumina nitride, isopressed refractory mixtures comprising metal oxides, carbides, or nitrides, or refractory substrates coated with alumina and/or magnesium zirconates or metal oxides, or a combination thereof.

In some embodiments, the tubular sleeve comprises a rotor head integrally formed at one end, the rotor head comprising a gas outlet. In other embodiments, the tubular sleeve comprises means for coupling to a separate rotor head at one end, e.g., threading means.

The tubular sleeve may have a length measured along its longitudinal axis. In embodiments, the tubular sleeve comprises a bore for receiving a hollow shaft, wherein the bore extends inside the tubular sleeve along at least 30%, at least 40%, at least 50%, at least 60%, at least 70%, at least 80% or at least 90% of the length of the tubular sleeve. In embodiments, the bore for receiving the hollow shaft extends inside the tubular sleeve along substantially the entire length of the tubular sleeve. In embodiments where the bore for receiving the hollow shaft does not extend inside the tubular sleeve along substantially the entire length of the tubular sleeve, the tubular sleeve may comprise a further conduit or bore for fluidly connecting the bore for receiving the hollow shaft to the gas outlet of the rotor head or to the means for coupling to the rotor head.

In embodiments, the tubular sleeve comprises a receiving portion configured to engage with a complementary locking portion on the hollow shaft. In some embodiments, the receiving portion has a polygonal cross-section. In some embodiments, the polygonal cross-section comprises at least 3, 4, 5 or 6 vertices. In some embodiments, the polygonal cross-section comprises no more than 12, 11 or 10 vertices. In other embodiments, the locking portion and the receiving portion have a cross-section which is circular with chords removed.

It will be understood that any of the optional features and embodiments described in relation to the rotor may apply equally to the tubular sleeve and vice versa.

Figs. 1 and 2 show a rotary device 100 according to an embodiment of the present invention. The rotary device 100 comprises a tubular sleeve 1 and a hollow shaft 3 extending inside the tubular sleeve 1. The tubular sleeve 1 comprises a rotor head 5 integrally formed at one end. The rotor head 5 is a standard dual-plate design comprising a first planar surface such as first plate 7 and a second plate 9, each extending perpendicular to the longitudinal axis of the tubular sleeve 1. The first plate 7 and second plate 9 are connected to each other by a plurality of pillars 11. The rotor head 5 further comprises a gas outlet 13 for discharging gas into molten metal, in the form of a bore extending through the first plate 7.

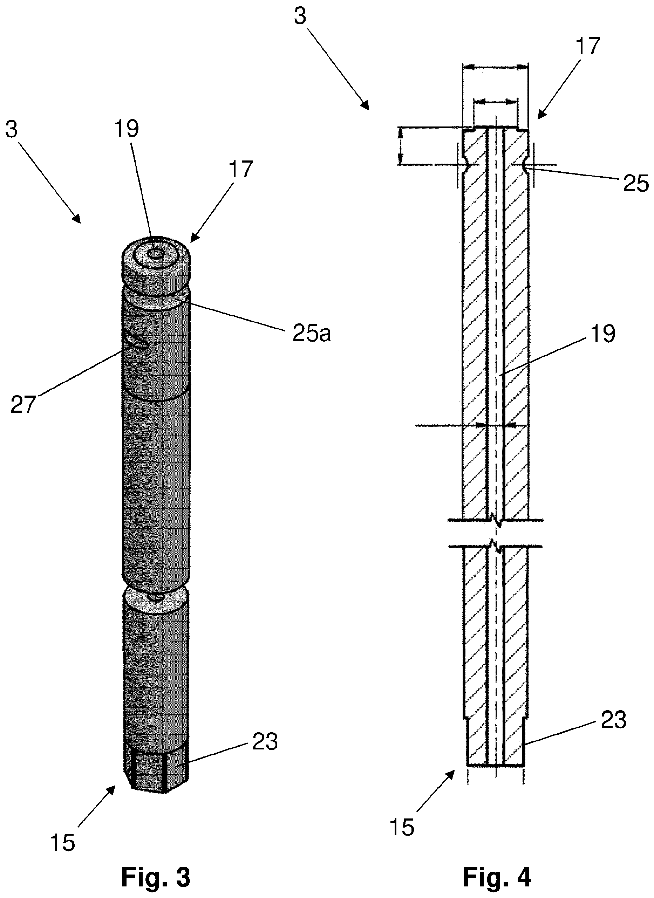

The hollow shaft 3 comprises a first end 15 and a second end 17, with the first end 15 being enclosed within the tubular sleeve 1. The hollow shaft 3 further comprises a bore 19 extending therethrough (as shown in Fig. 3). The tubular sleeve 1 comprises a conduit 21 which fluidly connects the bore 19 of the hollow shaft 3 to the gas outlet 13 of the rotor head 5, such that gas and/or solid metal treatment agents may flow through the hollow shaft 3 and out through the rotor head 5 into the molten metal in use. In some embodiments (not shown), the hollow shaft 3 may comprise a plurality of bores extending therethrough, so that gas and solid metal treatment agents may be delivered separately through the hollow shaft 3.

The first end 15 of the hollow shaft 3 comprises a locking portion 23 which engages with a complementary receiving portion 25 in the tubular sleeve 1. The locking portion 23 has a cross-sectional shape which is circular with six adjacent chords removed, i.e., the locking portion 23 has a cross-section which is generally hexagonal. The receiving portion 25 in the tubular sleeve 1 has a corresponding cross-sectional shape, such that the edges and vertices of the locking portion 23 abut against the receiving portion 25 and prevent independent rotation of the hollow shaft 3 inside the tubular sleeve 1.

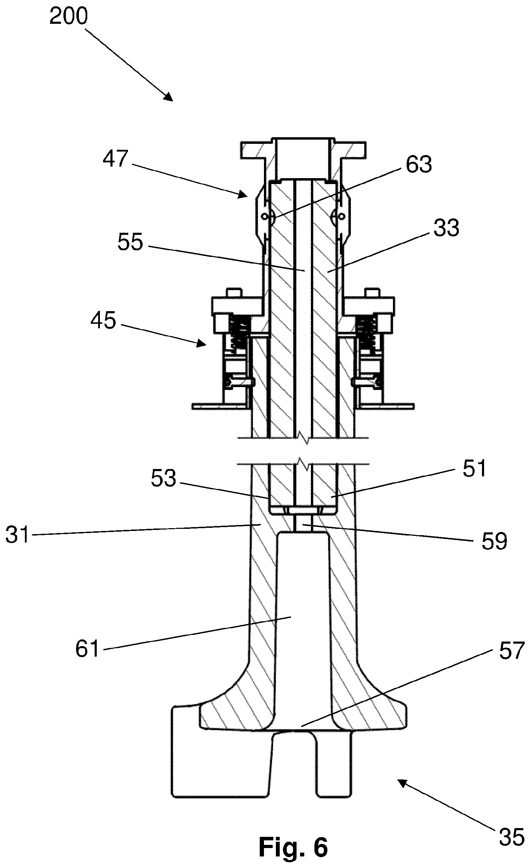

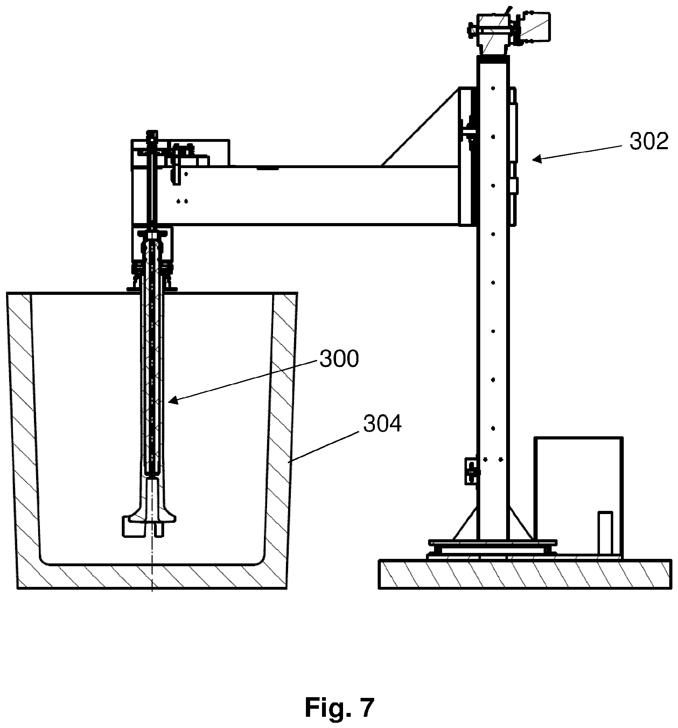

The second end 17 of the hollow shaft 3 protrudes from the tubular sleeve 1 and is configured to be coupled to an apparatus for rotating the rotary device 100 (for example, as shown in Fig. 7). In the illustrated embodiment, the second end 17 of the hollow shaft comprises a circumferential groove 25a. The circumferential groove 25a may act as a pulley for connecting to a motor via a V-belt. Alternatively, the circumferential groove 25a may be configured to engage with a collar (for example, as shown in Fig. 6), which in turn may act as a pulley for connecting to a motor via a V-belt or as a flange for connecting to a motor shaft by other means, e.g., nuts and bolts. In the illustrated embodiment, the second end 17 of the hollow shaft 3 further comprises an indent 27 for engaging with clamping means which secure the hollow shaft 3 to the tubular sleeve 1 (for example, as shown in Fig. 7).

The tubular sleeve 1 has a length LA as measured along the longitudinal axis of the tubular sleeve 1. The hollow shaft 3 has a length LB as measured along the longitudinal axis. The tubular sleeve 1 tapers inwardly along its length from a maximum diameter DA, such that the diameter of the tubular sleeve reduces slightly towards the rotor head 5. The hollow shaft 3 also tapers inwardly along its length from a maximum diameter DB at the first end 15 to a minimum diameter at the second end 17, corresponding to the internal dimensions of the tubular sleeve 1. The rotor head has a diameter DC.

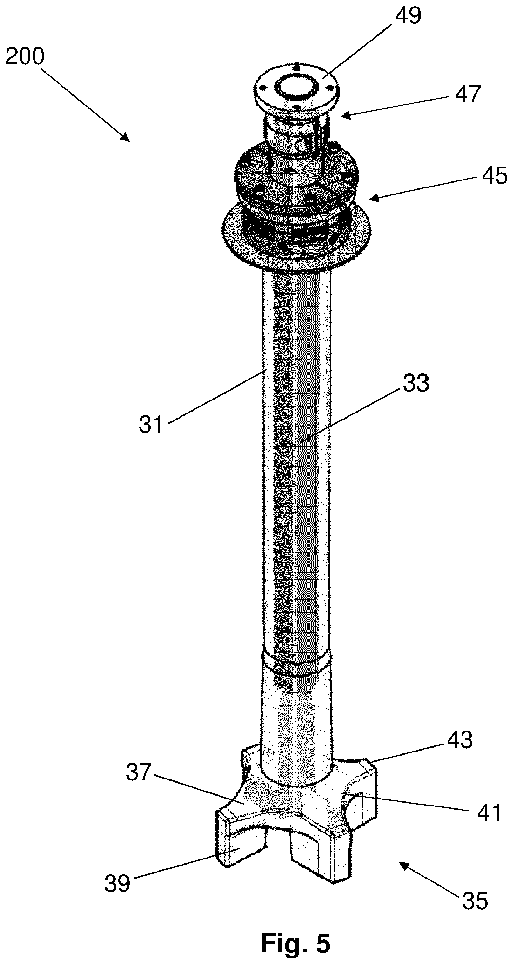

Fig. 5 shows a rotary device 200 according to another embodiment of the present invention. The rotary device 200 comprises a tubular sleeve 31 and a hollow shaft 33. The tubular sleeve 31 and hollow shaft 33 are generally the same as the tubular sleeve 1 and hollow shaft 3 shown in Figs.1-4, except that the tubular sleeve 1 comprises a rotor head 35 having a single-plate design. The rotor head 35 comprises a planar surface (or plate) 37 extending perpendicular to the longitudinal axis A of the tubular sleeve 31, with vanes 39 projecting from the base of the plate 37. The plate 37 is generally square in shape, with concave edges 41 and truncated corners 43.

The rotary device 200 comprises clamping means 45 for securing the tubular sleeve 31 to the hollow shaft 33. The rotary device 200 further comprises a collar 47 which fits around the second end of the hollow shaft 33. The collar provides a flange 49 which is configured to couple the rotary device 200 to a rotating apparatus (for example, as shown in Fig. 7).

Fig. 6 shows a cross-sectional view of the rotary device 200 shown in Fig. 5. The first end of the hollow shaft 33 is enclosed within the tubular sleeve 31 and comprises a locking portion 51 which engages with a complementary receiving portion 53 in the tubular sleeve 31. A bore 55 extends through the hollow shaft 33 and is fluidly connected to the gas outlet 57 of the rotor head 35 by conduits 59, 61.

The second end of the hollow shaft 33 comprises a circumferential groove 63 which engages with the collar 47. The clamping means 45 secure the tubular sleeve 31 to the hollow shaft 33 in conjunction with the collar 47.

Fig. 7 shows a rotary device 300 according to an embodiment of the present invention, assembled with an apparatus 302 for rotating the rotary device 300 and injecting a gas and/or metal treatment agent into molten metal through the rotary device 300. In use, the rotary device 300 is lowered into a ladle 304 (or furnace). The ladle 304 may be charged with molten metal either before or after the rotary device 300 is lowered in. The rotary device 300 is then used to treat the molten metal, for example using a method in accordance with the present invention.

Example 1: A rotary device according to an embodiment of the present invention was made with a hollow shaft comprising graphite and a tubular sleeve comprising fused silica. The tubular sleeve comprised an integrally formed rotor head. The length of the tubular sleeve as measured along its longitudinal axis was 123 cm (not including the rotor head). The graphite shaft extended into the tubular sleeve along 100 cm of the length of the tubular sleeve. The maximum diameter of the graphite shaft was 7.6 cm. The tubular sleeve had a maximum diameter of 11.6 cm and a wall thickness of 1.6 cm.

The rotor head had a standard dual-plate design, comprising two parallel, square-shaped plate having concave edges and truncated corners, connected by four pillars. The first plate comprises a centrally-located bore for discharging gas into molten metal. The diameter of the plates was 25 cm.

The rotary device was successfully used for treating molten metal. Repeated use eventually resulted in some warping and distortion of the rotor head due to slight softening of the fused silica, which reduced stirring efficiency.

Example 2: Another rotary device according to an embodiment of the present invention was made with a hollow shaft comprising graphite and a tubular sleeve comprising VISOTM isostatically-pressed carbon-bonded alumina. The dimensions of the rotary device were the same as those of the rotary device in Example 1.

The rotary device of Example 2 comprised a modified rotor head design comprising a single plate and vanes. The plate was generally square-shaped, having concave edges and truncated corners, and four vanes extending from the base of the plate at each of the corners. The plate comprises a centrally-located bore for discharging gas into molten metal. The diameter of the plate was 25 cm.

The rotary device of Example 2 was successfully used for treating molten metal 18 times without any sign of deformation and minimal indication of wear. The graphite shaft showed no signs of failure, and so the graphite shaft was still fit for further use with a replacement outer sleeve. The graphite shaft was found to last for at least 50 uses without failure.

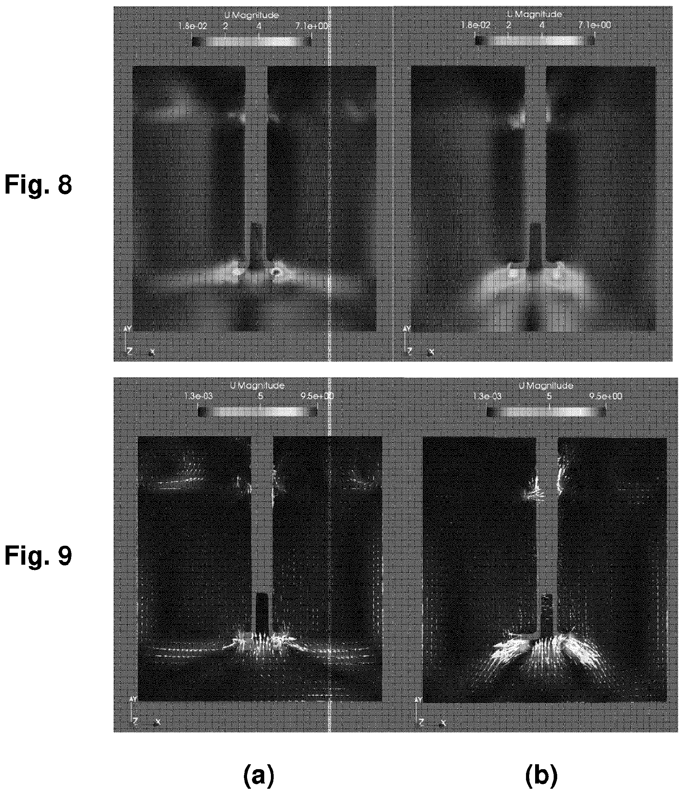

Flow pattern simulations: Flow pattern simulations were performed using OpenFoam^{®} software to compare the velocity and direction of flow exhibited by the single-plate and dual-plate rotor designs in molten steel, at various different rotation speeds. The results are shown in Figs. 8-10.

Fig. 8 shows the velocity field after spinning the dual-plate rotor (a) and single-plate rotor (b) for 15 seconds at 600 rpm, while Fig. 9 shows the scaled flow pattern. The peak flow velocity achieved by both designs was similar. However, the direction of flow was slightly different, with the exit flow from the dual-plate rotor being mostly horizontal, while the single-plate design showed more downward directed flow. Both rotor designs showed good simulated stirring performance in molten steel, although the single-plate rotor showed slighted higher torque than the dual-plate design (271 N.m for the single-plate rotor compared with 235 N.m for the dual-plate rotor).

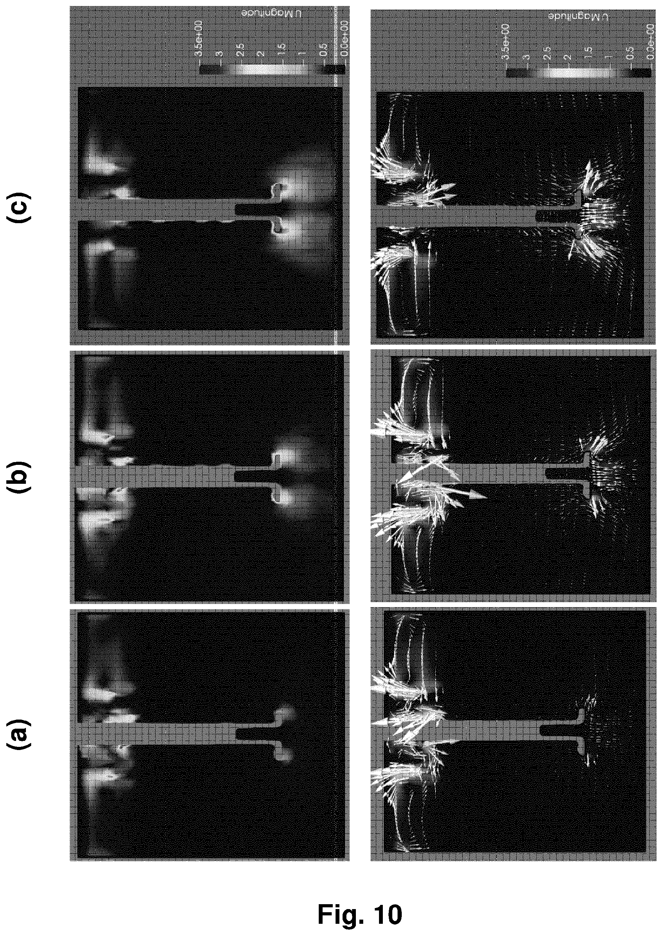

Fig. 10 shows the velocity field and scaled flow pattern after spinning the single-plate rotor for 15 seconds at (a) 100 rpm, (b) 200 rpm and (c) 300 rpm. Stirring performance was shown to increase with increasing rotation speed.

## Claims

1. A method for treating molten iron comprising:
applying a metal treatment agent into molten iron, wherein the metal treatment agent comprises a wire or a cored wire and comprises a nodularising agent; and
stirring the molten iron using a rotary device (100, 200) comprising a rotor head (5, 35) and a tubular sleeve (1, 31), wherein the rotor head (5, 35) comprises at least one planar surface extending in a direction perpendicular to the longitudinal axis of the tubular sleeve, and a plurality of vanes projecting from the planar surface in a direction substantially parallel to the longitudinal axis of the tubular sleeve;
wherein the wire or cored wire is applied through the rotor head (5, 35).

2. The method according to any one of the preceding claims, wherein the metal treatment agent comprises at least 50%, preferably 90%, and more preferably at least 95% magnesium.

3. The method according to claim 1 or 2, wherein the metal treatment agent is applied during the stirring to thereby cause the metal treatment agent to bubble through the molten iron; and forming ductile iron, otherwise known as spheroidal graphite iron (SGI) or compacted graphite iron (CGI) from the molten iron.

4. The method according to any one of the preceding claims, wherein the rotary device comprises:
a tubular sleeve (1, 31) comprising a rotor head (5, 35) at one end, and
a shaft (3, 33) extending inside the tubular sleeve (1, 31) such that at least a portion of the shaft (3, 33) is enclosed by the tubular sleeve (1, 31),
wherein the tubular sleeve (1, 31) is formed from a refractory material that is resistant to corrosion and thermal shock, and
wherein the shaft (3, 33) is formed from a material comprising graphite, and
optionally, wherein the shaft is a hollow shaft (3, 33) and the metal treatment agent is applied to the molten iron through the hollow shaft.

5. The method according to any of the preceding claims, wherein the molten iron is received from a cupola furnace, wherein the method further comprises: desulphurisation of the molten iron by bubbling at least one of magnesium, calcium, and calcium carbide through the molten iron, followed by testing a level of sulphur in the molten iron, followed by bubbling of magnesium through the molten iron for the magnesium to operate as a nodularising agent.

6. The method according to any of the preceding claims, further comprising discharging a gas into the molten iron through the rotor head (5, 35).

7. The method according to any one of the preceding claims, further comprising feeding the wire or cored wire comprising the metal treatment agent into the molten iron, optionally wherein the cored wire comprises an outer sheath comprising a high melting point metal, and an inner core comprising the metal treatment agent, optionally wherein the metal treatment agent further comprises calcium, calcium carbide, cerium, ferrosilicon magnesium, or combinations thereof.

8. The method according to any one of the preceding claims, wherein applying a metal treatment agent to molten iron comprises adding a first metal treatment agent and at least a second metal treatment agent, and optionally, wherein the first metal treatment agent is applied to the molten iron through the rotor head (5, 35) and wherein the second metal treatment agent is applied to the molten iron adjacent to the rotary device (100, 200).

9. The method according to claim 8, wherein the second metal treatment agent comprises an inoculant, preferably zirconium, manganese, barium, calcium, ferrosilicon, or combinations thereof.

10. The method according to any one of claims 8 to 9, wherein the first metal treatment agent comprises magnesium and the second metal treatment agent comprises barium, wherein the method further comprises applying the second metal treatment agent followed by applying the first metal treatment agent.

11. The method according to any one of claims 8 to 10, further comprising dispersing argon gas into the molten iron prior to applying the second metal treatment agent.

12. The method according to any one of claims 8 to 11, wherein the second metal treatment agent comprises at least 30% zirconium, preferably at least 50% zirconium, and/or wherein the second metal treatment agent comprises at least 30% barium.

13. The method according to claim 4 or any claim dependent thereon, wherein the rotor head (5, 35) is integrally formed with the tubular sleeve (1, 31) or wherein the rotor head (5, 35) is coupled to the end of the tubular sleeve (1, 31).

14. The method according to any one of claim 4 or any claim dependent thereon, wherein the hollow shaft (3, 33) has a first end and a second end, and wherein the first end is enclosed by the tubular sleeve (1, 31), optionally wherein the second end of the hollow shaft (3, 33) is configured to be coupled to an apparatus for rotating the rotary device (100, 200).

15. The method according to any one of the preceding claims, wherein the rotor head (5, 35) includes an outlet for applying the metal treatment agent into molten iron, and optionally, wherein the shaft is a hollow shaft (3, 33), and wherein the hollow shaft (3, 33) is in communication with the outlet.

## Patentansprüche

1. Verfahren zum Behandeln von geschmolzenem Eisen, umfassend:
Anwenden eines Metallbehandlungsmittels in geschmolzenes Eisen, wobei das Metallbehandlungsmittel einen Draht oder einen Fülldraht umfasst und ein Nodularisierungsmittel umfasst; und
Rühren des geschmolzenen Eisens unter Verwendung einer Drehvorrichtung (100, 200), die einen Rotorkopf (5, 35) und eine röhrenförmige Hülse (1, 31) umfasst, wobei der Rotorkopf (5, 35) mindestens eine ebene Oberfläche umfasst, die sich in einer Richtung senkrecht zur Längsachse der röhrenförmigen Hülse erstreckt, und eine Vielzahl von Flügeln, die von der ebenen Oberfläche in einer Richtung im Wesentlichen parallel zu der Längsachse der röhrenförmigen Hülse vorstehen;
wobei der Draht oder Fülldraht durch den Rotorkopf (5, 35) hindurch angewendet wird.

2. Verfahren nach einem der vorstehenden Ansprüche, wobei das Metallbehandlungsmittel mindestens 50%, vorzugsweise 90%, und bevorzugter mindestens 95% Magnesium umfasst.

3. Verfahren nach Anspruch 1 oder 2, wobei das Metallbehandlungsmittel während des Rührens angewendet wird, um dadurch das Metallbehandlungsmittel zu veranlassen, durch das geschmolzene Eisen hindurch zu perlen; und aus dem geschmolzenen Eisen duktiles Eisen, auch bekannt als Sphäroguss (SGI) oder Gusseisen mit Vermiculargraphit (CGI), zu bilden.

4. Verfahren nach einem der vorstehenden Ansprüche, wobei die Drehvorrichtung umfasst:
eine röhrenförmige Hülse (1, 31), die an einem Ende einen Rotorkopf (5, 35) umfasst, und
eine Welle (3, 33), die sich innerhalb der röhrenförmigen Hülse (1, 31) erstreckt, sodass mindestens ein Abschnitt der Welle (3, 33) von der röhrenförmigen Hülse (1, 31) umschlossen ist,
wobei die röhrenförmige Hülse (1, 31) aus einem feuerfesten Material gebildet ist, das korrosions- und temperaturschockbeständig ist, und
wobei die Welle (3, 33) aus einem Graphit umfassenden Material gebildet ist, und
wobei die Welle optional eine Hohlwelle (3, 33) ist und das Metallbehandlungsmittel durch die Hohlwelle hindurch auf das geschmolzene Eisen angewendet wird.

5. Verfahren nach einem der vorstehenden Ansprüche, wobei das geschmolzene Eisen aus einem Kupolofen empfangen wird, wobei das Verfahren weiter umfasst: Entschweflung des geschmolzenen Eisens durch Durchperlen von mindestens einem von Magnesium, Calcium und Calciumcarbid durch das geschmolzene Eisen hindurch, gefolgt von Prüfen eines Schwefelgehalts in dem geschmolzenen Eisen, gefolgt von Durchperlen von Magnesium durch das geschmolzene Eisen hindurch, damit das Magnesium als Nodularisierungsmittel wirkt.

6. Verfahren nach einem der vorstehenden Ansprüche, das weiter Austragen eines Gases in das geschmolzene Eisen durch den Rotorkopf (5, 35) hindurch umfasst.

7. Verfahren nach einem der vorstehenden Ansprüche, das weiter Zuführen des Drahts oder Fülldrahts, der das Metallbehandlungsmittel umfasst, in das geschmolzene Eisen umfasst, wobei der Fülldraht optional eine äußere Hülle umfasst, die ein Metall mit hohem Schmelzpunkt umfasst, und einen inneren Kern, der das Metallbehandlungsmittel umfasst, wobei das Metallbehandlungsmittel optional weiter Calcium, Calciumcarbid, Cer, Ferrosilizium-Magnesium oder Kombinationen davon umfasst.

8. Verfahren nach einem der vorstehenden Ansprüche, wobei Anwenden eines Metallbehandlungsmittels auf geschmolzenes Eisen Hinzufügen eines ersten Metallbehandlungsmittels und mindestens eines zweiten Metallbehandlungsmittels umfasst, und wobei optional das erste Metallbehandlungsmittel durch den Rotorkopf (5, 35) hindurch auf das geschmolzene Eisen angewendet wird, und wobei das zweite Metallbehandlungsmittel auf das geschmolzene Eisen an die Drehvorrichtung (100, 200) angrenzend angewendet wird.

9. Verfahren nach Anspruch 8, wobei das zweite Metallbehandlungsmittel ein Impfmittel, vorzugsweise Zirkonium, Mangan, Barium, Calcium, Ferrosilizium oder Kombinationen davon umfasst.

10. Verfahren nach einem der Ansprüche 8 bis 9, wobei das erste Metallbehandlungsmittel Magnesium umfasst und das zweite Metallbehandlungsmittel Barium umfasst, wobei das Verfahren weiter Anwenden des zweiten Metallbehandlungsmittels gefolgt von Anwenden des ersten Metallbehandlungsmittels umfasst.

11. Verfahren nach einem der Ansprüche 8 bis 10, das weiter Dispergieren von Argongas in das geschmolzene Eisen vor Anwenden des zweiten Metallbehandlungsmittels umfasst.

12. Verfahren nach einem der Ansprüche 8 bis 11, wobei das zweite Metallbehandlungsmittel mindestens 30% Zirkonium, vorzugsweise mindestens 50% Zirkonium, umfasst und/oder wobei das zweite Metallbehandlungsmittel mindestens 30% Barium umfasst.

13. Verfahren nach Anspruch 4 oder einem davon abhängigen Anspruch, wobei der Rotorkopf (5, 35) in einem Stück mit der röhrenförmigen Hülse (1, 31) gebildet ist oder wobei der Rotorkopf (5, 35) mit dem Ende der röhrenförmigen Hülse (1, 31) gekoppelt ist.

14. Verfahren nach Anspruch 4 oder einem davon abhängigen Anspruch, wobei die Hohlwelle (3, 33) ein erstes und ein zweites Ende aufweist, und wobei das erste Ende von der röhrenförmigen Hülse (1, 31) umschlossen ist, wobei optional das zweite Ende der Hohlwelle (3, 33) konfiguriert ist, mit einer Einrichtung zum Drehen der Drehvorrichtung (100, 200) gekoppelt zu werden.

15. Verfahren nach einem der vorstehenden Ansprüche, wobei der Rotorkopf (5, 35) einen Auslass zum Anwenden des Metallbehandlungsmittels in geschmolzenes Eisen beinhaltet, und wobei die Welle optional eine Hohlwelle (3, 33) ist, und wobei die Hohlwelle (3, 33) mit dem Auslass in Verbindung steht.

## Revendications

1. Procédé de traitement de fer en fusion comprenant :
l'application d'un agent de traitement de métaux dans du fer en fusion, dans lequel l'agent de traitement de métaux comprend un fil ou un fil fourré et comprend un agent de nodularisation ; et
l'agitation du fer en fusion à l'aide d'un dispositif rotatif (100, 200) comprenant une tête de rotor (5, 35) et un manchon tubulaire (1, 31), dans lequel la tête de rotor (5, 35) comprend au moins une surface plane s'étendant dans une direction perpendiculaire à l'axe longitudinal du manchon tubulaire, et une pluralité d'aubes faisant saillie depuis la surface plane dans une direction sensiblement parallèle à l'axe longitudinal du manchon tubulaire ;
dans lequel le fil ou le fil fourré est appliqué à travers la tête de rotor (5, 35).

2. Procédé selon l'une quelconque des revendications précédentes, dans lequel l'agent de traitement de métaux comprend au moins 50 %, de préférence 90 %, et plus préférentiellement au moins 95 % de magnésium.

3. Procédé selon la revendication 1 ou 2, dans lequel l'agent de traitement de métaux est appliqué pendant l'agitation pour amener, de ce fait, l'agent de traitement de métaux à réaliser un barbotage à travers le fer en fusion ; et former du fer ductile, également connu sous le nom de fer à graphite sphéroïdal (SGI) ou de fer à graphite compacté (CGI) à partir du fer en fusion.

4. Procédé selon l'une quelconque des revendications précédentes, dans lequel le dispositif rotatif comprend :
un manchon tubulaire (1, 31) comprenant une tête de rotor (5, 35) située au niveau d'une extrémité, et
un arbre (3, 33) s'étendant à l'intérieur du manchon tubulaire (1, 31) de telle sorte qu'au moins une partie de l'arbre (3, 33) soit entourée par le manchon tubulaire (1, 31),
dans lequel le manchon tubulaire (1, 31) est formé d'un matériau réfractaire qui est résistant à la corrosion et aux chocs thermiques, et
dans lequel l'arbre (3, 33) est formé d'un matériau comprenant du graphite, et
facultativement, dans lequel l'arbre est un arbre creux (3, 33) et l'agent de traitement de métaux est appliqué au fer en fusion à travers l'arbre creux.

5. Procédé selon l'une quelconque des revendications précédentes, dans lequel le fer en fusion est reçu d'un cubilot, dans lequel le procédé comprend en outre : la désulfuration du fer en fusion par barbotage d'au moins un élément parmi le magnésium, le calcium et le carbure de calcium à travers le fer en fusion, suivie par l'analyse du taux de soufre dans le fer en fusion, suivie par le barbotage de magnésium à travers le fer en fusion pour que le magnésium fonctionne comme un agent de nodularisation.

6. Procédé selon l'une quelconque des revendications précédentes, comprenant en outre l'évacuation d'un gaz dans le fer en fusion à travers la tête de rotor (5, 35).

7. Procédé selon l'une quelconque des revendications précédentes, comprenant en outre l'introduction du fil ou du fil fourré comprenant l'agent de traitement de métaux dans le fer en fusion, facultativement dans lequel le fil fourré comprend une gaine externe comprenant un métal à point de fusion élevé, et une âme interne comprenant l'agent de traitement de métaux, facultativement dans lequel l'agent de traitement de métaux comprend en outre du calcium, du carbure de calcium, du cérium, du ferrosilicium, du magnésium ou des combinaisons de ceux-ci.

8. Procédé selon l'une quelconque des revendications précédentes, dans lequel l'application d'un agent de traitement de métaux au fer en fusion comprend l'ajout d'un premier agent de traitement de métaux et d'au moins un second agent de traitement de métaux, et, facultativement, dans lequel le premier agent de traitement de métaux est appliqué au fer en fusion au moyen de la tête de rotor (5, 35) et dans lequel le second agent de traitement de métaux est appliqué au fer en fusion adjacent au dispositif rotatif (100, 200).

9. Procédé selon la revendication 8, dans lequel le second agent de traitement de métaux comprend un inoculant, de préférence du zirconium, du manganèse, du baryum, du calcium, du ferrosilicium ou des combinaisons de ceux-ci.

10. Procédé selon l'une quelconque des revendications 8 à 9, dans lequel le premier agent de traitement de métaux comprend du magnésium et le second agent de traitement de métaux comprend du baryum, dans lequel le procédé comprend en outre l'application du second agent de traitement de métaux suivie de l'application du premier agent de traitement de métaux.

11. Procédé selon l'une quelconque des revendications 8 à 10, comprenant en outre la dispersion de gaz argon dans le fer en fusion avant l'application du second agent de traitement de métaux.

12. Procédé selon l'une quelconque des revendications 8 à 11, dans lequel le second agent de traitement de métaux comprend au moins 30 % de zirconium, de préférence au moins 50 % de zirconium et/ou dans lequel le second agent de traitement de métaux comprend au moins 30 % de baryum.

13. Procédé selon la revendication 4 ou n'importe quelle revendication dépendant de celle-ci, dans lequel la tête de rotor (5, 35) est formée d'un seul tenant avec le manchon tubulaire (1, 31) ou dans lequel la tête de rotor (5, 35) est couplée à l'extrémité du manchon tubulaire (1, 31).

14. Procédé selon l'une quelconque des revendications 4 ou n'importe quelle revendication dépendant de celle-ci, dans lequel l'arbre creux (3, 33) présente une première extrémité et une seconde extrémité et dans lequel la première extrémité est entourée par le manchon tubulaire (1, 31), facultativement dans lequel la seconde extrémité de l'arbre creux (3, 33) est configurée pour être couplée à un appareil pour faire tourner le dispositif rotatif (100, 200).

15. Procédé selon l'une quelconque des revendications précédentes, dans lequel la tête de rotor (5, 35) inclut un orifice de sortie pour appliquer l'agent de traitement de métaux dans le fer en fusion et, facultativement, dans lequel l'arbre est un arbre creux (3, 33) et dans lequel l'arbre creux (3, 33) est en communication avec l'orifice de sortie.
